Europäisches Patentamt

European Patent Office

Office européen des brevets

(19)

(11) Publication number: **0 290 000**

**A2**

(12) **EUROPEAN PATENT APPLICATION**

(21) Application number: 88107129.4

(51) Int. Cl.⁴ **H04N 7/087**

(22) Date of filing: 04.05.88

(30) Priority: 05.05.87 IT 6738087

(43) Date of publication of application:
09.11.88 Bulletin 88/45

(84) Designated Contracting States:
DE ES FR GB IT NL

(71) Applicant: **Società Italiana per lo Sviluppo dell'Elettronica S.I.SV.EL S.p.A.**
**Via Pinerolo 23**
**I-10060 None (TO)(IT)**

(72) Inventor: **Farina, Attilio**
**Via Ventimiglia 162**
**I-66020 Torino(IT)**

(74) Representative: **Mayer, Hans Benno**
**Via dell'Orso 7/A**
**I-20121 Milano(IT)**

(54) **Improved teletext receiver.**

(57) There is described an improved receiver for an information transmission system, represented by a plurality of pages, each one selectable by the user among all those which are receivable, some of said pages being of the so called revolving type, the receiver comprising a memory for one or more of said pages, command means providing for a plurality of keys, which may be pressed by the user in order to produce command signals, control means, coupled to said command means in order to produce suitable active signals as a consequence of said command signals, and a decoding circuit coupled to said control means, capable of receiving, selecting, processing and displaying the information pages when said active signals are received, wherein one of said command signals is the so called "stop" (or Halt) signal, which is used to stop the automatic changing of said revolving pages; the main characteristics of the receiver is represented by the fact that said control means provide, when said "stop" signal coming from said command means is received, for verifying if the page which is actually received is a revolving page, and in the affirmative case, for sending out active signals to said decoder and said page memory, so that, beside freezing the displaying of the page which is actually received, the pages following the page which is actually received and pertaining to the same group of revolving pages are memorized in said memory.

Fig. 1

## "IMPROVED TELETEXT RECEIVER"

The present invention refers to an improved receiver for an information transmission system, represented by a plurality of pages, each one selectable by the user among all those which are receivable, some of said pages being of the so called revolving type, the receiver comprising a memory for one or more of said pages, command means providing for a plurality of keys, which may be pressed by the user in order to produce command signals, control means, coupled to said command means in order to produce suitable active signals as a consequence of said command signals, and a decoding circuit coupled to said control means, capable of receiving, selecting, processing and displaying the information pages when said active signals are received, wherein one of said command signals is the so called "stop" (or Halt) signal, which is used to stop the automatic changing of said revolving pages.

It is known that in various european countries, among which there is Italy, transmission systems are operating (generically known under the name of "teletext", but more specifically called in Italy "televideo" and in Western Germany "Videotext") which allow the transmission, together with normal television signals, of additional information, inserted in the video signal (as digital coded signals) in some of the unused horizontal lines during the vertical retrace period.

These coded signals, at user request, are decoded by a suitable decoding circuit, of known type and usually implemented as a monolythic integrated circuit, which is inserted in the television receiver, in order to allow to display on the television screen one of the transmitted information pages, containing texts or graphics.

Normally a few hundreds of pages are transmitted, grouped by topics (for instance: last news: pages 110-125, sports: pages 150-162, politics: pages 210-222, games: pages 315-345, etc.); in the first page (zero page) there is usually shown the general topics index, and in subsequent pages the sub-indices by topic, with the relevant page numbers.

With the first decoders the user was obliged, each time he would receive a selected page, to press one after the other three numbered keys, in order to compose the three digits number of the desired page; moreover, each time he would change the page, even to pass to the next one, he was obliged to press again three keys to compose the new page number, and often also to recall previously the index and/or the sub-index in order to find the relevant page number.

Obviously such a maneuvre was rather cumbersome, also considering that, if a mistake was made, i.e. if a wrong key was depressed, it was in any case necessary first to complete the number triplet and then press the three correct digits; this is the reason why systems have been proposed in order to make easier to the user to obtain the desired page: for instance in the italian patent application N° 68221-A/83, filed on 22/11/1983 in the name of Indesit S.p.A., there is described a Teletext signals receiver comprising memory means in order to store the number corresponding to the page which is currently displayed onto the screen, and control means allowing the user, to recall and display, depressing a single key, the page preceding or following the page currently displayed.

Other Teletext receivers have also been proposed (e. g. receivers based on the Philips 5230 + 5240 or the I.T.T. TPU 2700 decoders), which provide memory means capable to memorize contemporaneously more information pages (e. g. 4 or 8 pages, usually consecutive) in order to can display them immediately at the user request.

Moreover present transmission methods provide for many topics the so called "revolving" pages; i. e. for some topics which occupy more than one page, the pages which follow are automatically acquired one after the other, without the need to compose the relevant numbers; in fact said revolving pages have all the same number, but they are transmitted successively (for instance let's assume that the last news page 110 is actually composed by 4 pages, i. e. pages 110a, 110b, 110c, 110d, which are transmitted one after the other and are acquired in the same order by the decoder when the page 110 is called).

But a fact happens: while the user is reading page 110a, if he is rather slow in reading, or if something will distract him, the page will automatically switch to the next page 110b before the user has read it completely. In order to avoid such an inconvenience, there is the "stop" key, which temporarily blocks the acquisition of new pages by the decoder, freezing the display of the last acquired page (in our example page 110a). But when the "stop" key is pressed again (the "stop" key is usually a bistable device) in order to free the decoder again, the next to be transmitted page is acquired, for instance page 110c or 110d. This fact is of course very inconvenient; practically no convenient method is known to read revolving pages in the correct order, using to read them all the time that is needed.

It is an object of the present invention to indicate an improved Teletext transmission receiver, which, avoiding the described inconvenience, allows the user to read the revolving pages in the correct order, using the desired time to read each one of the pages.

With this aim in view, the subject of the present invention is an improved receiver for an information transmission system, represented by a plurality of pages, each one selectable by the user among all those which are receivable, some of said pages being of the so called revolving type, the receiver comprising a memory for one or more of said pages, command means providing for a plurality of keys, which may be pressed by the user in order to produce command signals, control means, coupled to said command means in order to produce suitable active signals as a consequence of said command signals, and a decoding circuit coupled to said control means, capable of receiving, selecting, processing and displaying the information pages when said active signals are received, wherein one of said command signals is the so called "stop" (or Halt) signal, which is used to stop the automatic changing of said revolving pages, characterized by the fact that said control means provide, when said "stop" signal coming from said command means is received, for verifying if the page which is actually received is a revolving page, and in the affirmative case, for sending out active signals to said decoder and said page memory, so that, beside freezing the displaying of the page which is actually received, the pages following the page which is actually received and pertaining to the same group of revolving pages are memorized in said memory.

Characteristics and advantages of the improved Teletext transmissions receiver according to the invention will be clear from the following description and the attached drawings, given as a mere indicative and not limiting example, where:

figure 1 shows the schematica block diagram of the part of the circuit according to the invention of a Teletext signals receiver;

figure 2 schematically shows the command unit of the receiver of figure 1;

figure 3 shows the logical flux of the operation of a part of the control unit of the receiver of figure 1.

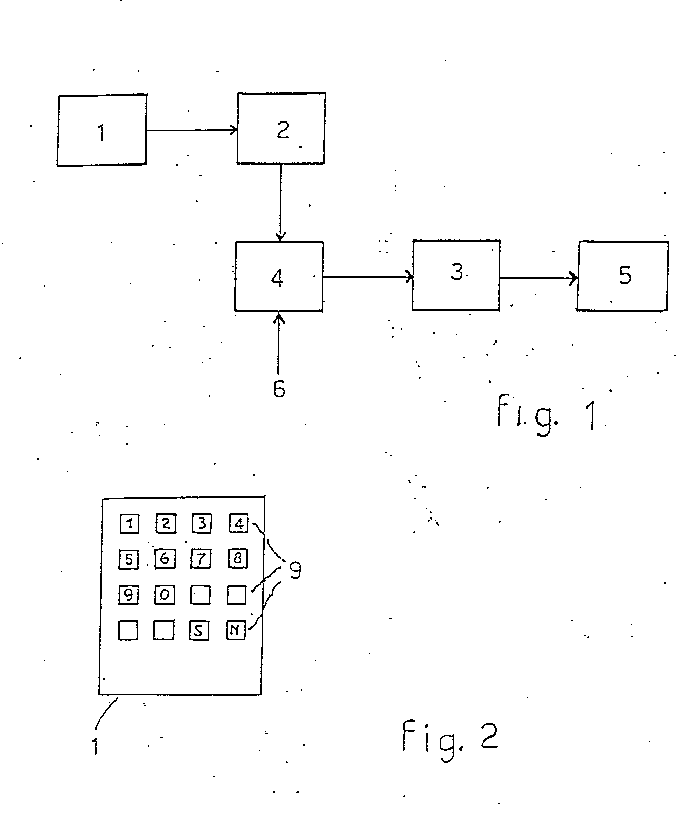

In figure 1, with the reference numeral 1 there is indicated the command unit, with reference numeral 2 the control unit, with numeral 3 a memory capable of memorizing the content of some information pages, of a known type (e.g. 4 pages), in the following called "page memory"; with numeral 4 there is indicated the Teletext decoder, with numeral 5 the display·system of the content of the selected page, and with numeral 6 there is indicated a terminal at which there is available the Teletext signal at video frequency.

Command unit 1 may be of a known type, for istance a remote control keyboard; it shall comprise, beside the usual numbered keys 0-9 and other keys required to control the receiver operation, two additional keys in order to freeze the currently displayed page and to display the pages which follow said currently displayed page; in figure 2 which shows the keyboard of a possible command unit, such additional keys bear respectively letter "S" and letter "N", initials of "Stop" and "Next".

Control unit 2 according to the invention will be described later on. Decoder 4 and display 5 may be the type normally used in known Teletext receivers; display 5 is usually represented by the television receiver picture tube.

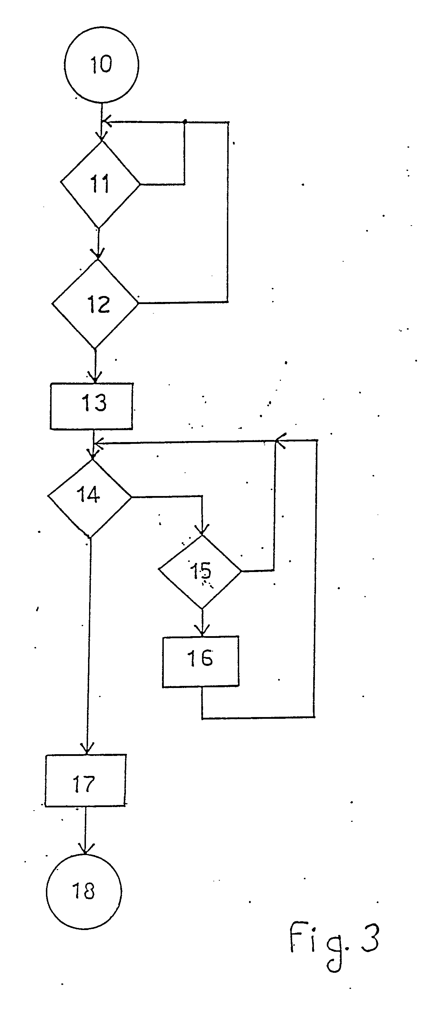

In figure 3 there is shown the logical flux connecting the logical blocks of the control unit 2, performing the functions which are the subject of the present invention; blocks of unit 2 performing other normal known functions are not shown; control unit 2 may be implemented either by means of logical wired blocks or by means of a microprocessor system (programmed logical); the two systems are perfectly equivalent from the operation point of view.

Block 10 is the start block; block 11 is a block which verifies whether the "S" key of the command unit 1 has been depressed or not; in verification blocks in figure 3 the bottom output corresponds to the "Yes" output, the lateral output corresponds to the "No" output.Therefore, if the answer is affirmative, i.e. if the "S" key has been depressed, the block leaves the control to next block 12; in the contrary case the control returns to the block 11 itself.

Block 12 verifies whether the received and displayed page is a revolving page, i.e. whether it is a multiple page; in the affirmative case it leaves the control to next block 13; in the negative case the control returns to the block 11.

Block 13 provides for sending to decoder 4 a first suitable active signal so that the decoder instead of sending to page memory 3 the pages having numbers subsequent to that of the displayed page (i.e. in our example pages 111, 112, 113 and 114), sends to the said memory the subsequent revolving pages (in our example pages 110b, 110c and 110d); block 13 moreover provides for sending a second suitable active signal to a page memory managing block (known and already existing in the receivers with page memory) in order to stop the changing of the displayed page even if a new page is acquired.

Block 13 then leaves the control to next block 14; block 14 verifies whether the "S" key on the command unit 1 has been depressed (again); in the affirmative case it leaves the control to block 17; in the negative case it leaves the control to block 15.

Block 15 verifies whether the "N" key on the command unit 1 has been depressed; in the affirmative case the control is left to next block 16; in the negative case the control returns to block 14.

Block 16 provides for sending to the above said memory managing block a third suitable active signal, so that the first page waiting in the memory (page 110b) is displayed; at the same time, if necessary, i.e. if the revolving pages number is greater than that of the pages which memory 3 can store, the revolving page next to the last one which has been stored is acquired and memorized. Memory 3 shall therefore be managed in a circular way, so that the count is kept of the revolving pages already displayed and of those not yet shown.

Block 16 returns the control to block 14.

Block 17 provides for cancelling first and second active signals and for resetting the decoder and the memory in normal operating conditions; to memory 3 there are sent no more revolving pages but main pages; the display of the revolving pages happens again in automatic way as soon as they are received and acquired by the decoder.

Block 17 leaves the control to block 18, which is the final block of the part of logical flux which is relevant to the invention being the subject of the present application.

As clearly shown by the description of the operation of control unit 2 according to the invention, the user can, depressing the "Stop" key, comfortably read the displayed page, which remains frozen; when he is ready, pressing the "N" key the next revolving page is displayed, and so on until all revolving pages have been shown, in the correct order, or until the user is tired; pressing the "Stop" key again normal operation is restored.

As may be inferred by the above description, the improved Teletext receiver according to the invention allows to the user a comfortable reading of revolving pages, using all the time he desires.

It is clear that many variations of the described implementation of the improved Teletext receiver, are possible to the man of the art, without departing from the scope and the novelty principles of the present invention.

As an example as normally the decoder 4 already comprises a microprocessor, a possible variation to the described receiver may be obtained integrating control unit 2 together with decoder 4 into only one operating unit, controlled by the microprocessor, with a clear saving of parts and of cost.

## Claims

1. Improved receiver for an information transmission system, represented by a plurality of pages, each one selectable by the user among all those which are receivable, some of said pages being of the so called revolving type, the receiver comprising a memory for one or more of said pages, command means providing for a plurality of keys, which may be pressed by the user in order to produce command signals, control means, coupled to said command means in order to produce suitable active signals as a consequence of said command signals, and a decoding circuit coupled to said control means, capable of receiving, selecting, processing and displaying the information pages when said active signals are received, wherein one of said command signals is the so called "stop" (or Halt) signal, which is used to stop the automatic changing of said revolving pages, characterized by the fact that said control means (2) provide, when said "stop" signal (S) coming from said command means (1) is received, for verifying if the page which is actually received is a revolving page, and in the affirmative case, for sending out active signals to said decoder (4) and said page memory (3), so that, beside freezing the displaying of the page which is actually received, the pages following the page which is actually received and pertaining to the same group of revolving pages are memorized in said memory.

2. Improved receiver from an information transmission system, according to claim 1, characterized by the fact that said control means (2) provide, when a command signal of the "next page" type (N), is received from said command means 1, for recalling from said page memory (3) the next revolving page of the group of revolving pages which is currently being displayed.

3. Improved receiver for an information transmission system, according to claim 1, characterized by the fact that said control means (2) provide, when a second "Stop" (S) command signal is received from said command means 1, for restoring the initial operating way of functioning.

4. Improved receiver for an information transmission system, according to any one of the preceding claims, characterized by the fact that the page memory (3) is managed in a circular way by said control means (2), so that each time a suitable signal (N) is generated by said command means (1), the first acquired page is displayed and the revolving page next to the last stored page is memorized in said memory, at the place of the displayed one.

5. Improved receiver for an information transmission system, according to any one of the preceding claims, characterized by the fact that said control unit (2) is implemented by means of wired logics.

6. Improved receiver for an information transmission system, according to any one of the preceding claims, characterized by the fact that said control unit (2) is implemented by means of programmed logics and comprises a microprocessor.

7. Improved receiver for an information transmission system, according to claim 6, characterized by the fact that said control unit (2) is integrated with said decoder (4) and that both units are controlled by only one microprocessor.

8. Improved receiver for an information transmission system, according to any one of the preceding claims, characterized by the fact that said command means (1) are a part of a remote control system.

Fig. 1

Fig. 2

Fig. 3